# EUROPEAN PATENT APPLICATION

(11) **EP 4 160 546 A1**
(43) Date of publication of application: **05.04.2023**
(21) Application number: 21200527.6
(22) Date of filing: 01.10.2021
(51) Int. Cl.: G06T 19/00, G06N 3/02

(54) **METHODS RELATING TO SURVEY SCANNING IN DIAGNOSTIC MEDICAL IMAGING**

(71) Applicant: Koninklijke Philips N.V., 5656 AG Eindhoven (NL)
(72) Inventor: DESHPANDE, rishikesh Narayanrao, Eindhoven (NL); SCHMITT, Holger, Eindhoven (NL); SENEGAS, Julien Thomas, Eindhoven (NL); GOTMAN, Shlomo, Eindhoven (NL); NETSCH, Thomas, Eindhoven (NL); Martin, Martin, Eindhoven (NL)
(74) Representative: Philips Intellectual Property & Standards

(57) **Abstract**

Methods related to survey scanning in diagnostic medical imaging. At least one aspect relates to a method for generating, using a machine learning model, a simulation of medical image data in accordance with a defined set of acquisition parameters for a medical imaging apparatus, based on processing of an initial 3D image data set (e.g. a survey image dataset).

## Description

### FIELD OF THE INVENTION

The present invention relates to the field of diagnostic medical imaging, and in particular to a method concerning acquisition and use of survey scan data, such as the optimization of scan parameters based on preliminary survey scan data.

### BACKGROUND OF THE INVENTION

Within medical imaging, planning of clinical scans is routinely performed based in part on an initial Surview ("survey view") scan. The survey scan is typically lower resolution than the full scan, and thus can be captured relatively quickly, and (in the case of irradiating modalities), applies a lower radiative dose on the patient. The survey scan can then be used to set parameters of the scan protocol to be followed for the subsequent diagnostic scan, including for example the boundaries of the scan range to be used. For example, often the survey scan will cover a full spatial range of the scanner area (or at least a larger range than is subsequently used in the diagnostic scan) to capture the whole anatomy, and which is then used to set the boundaries of the scan range used in the diagnostic scan captured afterward.

One class of medical imaging modality in which survey scans are routinely used is tomographic imaging, such as magnetic resonance (MR) imaging or x-ray computed tomography (CT) imaging.

By way of illustration, within the field of CT imaging, for CT image acquisition of an organ of interest, different guidelines and protocols exist in relation to the optimal radiative dose to be administered to a patient to ensure safety and at the same time acquire a diagnostic CT image with adequate quality. Various different factors affect the radiative dose which is administered, and affect the quality of the image which is acquired. These include acquisition or scanning parameters of the imaging apparatus as well as patient positioning relative to the apparatus. Technologists must make decisions at the start of a scan to ensure that the scan parameters are selected properly and the patient is positioned correctly in order to acquire the diagnostic CT image with adequate diagnostic quality while attaining an optimal radiation dose.

Within CT imaging, in addition to dual 2D survey imaging (frontal and lateral), in the state of the art it is also possible to acquire 3D survey images at considerably lower dose than a typical full 3D scan.

Even though 3D survey images can reveal more detailed information than 2D survey images, the technologist is still required to manually configure a number of acquisition parameters such as tube-voltage, tube-current or reconstruction filters. The survey image by itself does not directly assist in determining optimum values for these.

### SUMMARY OF THE INVENTION

The invention is defined by the claims.

According to examples in accordance with an aspect of the invention, there is provided a computer implemented method for simulating a preview of medical imaging scan data based on initial survey scan data, comprising:
receiving from a medical imaging apparatus first image data of an anatomy of a patient, wherein the first image data is 3D image data;
obtaining an indication of at least a first set of one or more candidate imaging scan parameters for a subsequent imaging scan to be performed on the anatomy;
retrieving from a datastore a machine learning model, wherein the machine learning model is trained to perform image-to-image translation, and is adapted to receive as an input at least a subset of a 3D image dataset of an anatomy, and is adapted to generate as an output simulated image data of the anatomy, wherein the simulated image data simulates an expected appearance of the image data which would be acquired from the medical imaging apparatus if run with said at least first set of candidate scan parameters;
processing the first image data using the machine learning model, to obtain simulated image data; and
acquiring second image data of the anatomy using the medical imaging apparatus with a second set of imaging scan parameters, wherein the second set of parameters may be the same or different to the first set of parameters.

Thus, embodiments of the invention are based on using a trained machine-learning model to simulate the appearance of the full diagnostic scan based on the 3D survey scan data. This allows an operator to adjust the scan parameters in advance of performing the full scan, so as to improve image quality or anatomy coverage.

The first image data referred to above may be survey scan data. The first image data may have lower spatial resolution than the second image data.

Imaging scan parameters means parameters or settings of the medical imaging apparatus when acquiring the image data.

The machine learning model is retrieved based on, or in dependence upon, the first set of scanning parameters, i.e. a machine learning model is retrieved which is known to be trained to generate simulated image data according to the defined first set of scan parameters. In other words an appropriately trained machine learning model for that set of scan parameters is selected.

In some embodiments, the method comprises controlling a user interface to display a visual representation of the simulated image data.

The method may comprise retrieving the machine learning model from a datastore, for example from a database stored on a datastore. The machine learning model may be retrieved from the database based on querying the database according to the at least first set of candidate scan parameters. The database may store a plurality of differently trained versions of the same machine learning model, each trained according to a different set of imaging scan parameters, i.e. each trained to simulate the appearance of image data acquired with a different set of imaging scan parameters. The retrieved version may then be applied to the received first image data.

In some embodiments, the method may comprise generating a plurality of sets of simulated image data for each of a plurality of sets of candidate imaging scan parameters, based on, for each candidate set of scan parameters: retrieving from the datastore one of the machine learning model versions; and applying the machine learning model to the candidate set of scan parameters.

Preferably all the versions of the model are the same apart from their training.

The plurality of sets of candidate imaging scan parameters may be generated by the method itself, or may be input by a user.

In some embodiments, the method may comprise: controlling a user interface to display a visual representation of each set of simulated image data, and an indication of the candidate scan parameters corresponding to each set of simulated image data; receive from the user-interface a user-indicated selection of one of the candidate sets of scan parameters; and wherein the second set of scan parameters used for acquiring the second image data is defined by the user selection.

The method may further comprise controlling the user interface such that the user-indicated selection of one of the candidate sets of scan parameters is achieved through a user-selection of one of the displayed sets of simulated image data.

In some embodiments, the method may comprise: providing on a user interface a user control permitting a user to define a custom set of candidate imaging scan parameters; receiving from the user interface a user-defined custom set of candidate scan parameters; and wherein the step of retrieving the machine learning model from the datastore comprises retrieving a machine learning model trained to generate simulated image data which simulates the appearance of image data acquired with the user-defined custom set of candidate scan parameters; and wherein the method further comprises displaying the simulated image data output from the machine learning model on a user interface.

In some embodiments, the method is configured such that a change in the custom scan parameters by the user via the user control automatically triggers generation of new simulated image data in accordance with the changed custom scan parameters, by retrieving a machine learning model trained to simulate the appearance of image data acquired with the custom scan parameters.

In some embodiments, the method further comprises applying a quality assessment to the simulated image data to derive a quality indicator for the simulated image data.

In some embodiments, the method further comprises applying a quality assessment to each set of simulated image data to derive a quality indicator for each set of simulated image data; selecting one of the sets of candidate scan parameters based on comparison of the quality indicators for the different sets of simulated image data; and wherein the second set of scan parameters is set in accordance with the selection, and wherein acquisition of the second image data is triggered automatically after the selection.

In some embodiments, the method comprises controlling a user interface to display a visual representation of the simulated image data; receiving from the user interface a user-indicated adjusted set of candidate imaging scan parameters, subsequent to display of the simulated image data; and wherein the received adjusted set of imaging scan parameters are used as the second set of scan parameters.

In some embodiments, the first image data comprises a plurality of 2D slice images which together form a 3D image dataset. The machine learning model may in some embodiments be trained to receive as an input a 2D slice image and generate as an output a simulated 2D slice image. In some embodiments, the step of processing of the first image data with the machine learning model comprises applying the machine learning model to each of the 2D slice images of the first image data.

This results in a set of simulated 2D slice images which together form a simulated 3D image dataset.

In other examples however, the machine learning model may be trained to receive a 3D image, and wherein the output from the model is a simulated 3D image.

The machine learning model is a deep learning machine learning model. It may be a deep learning artificial neural network.

In a preferred set of embodiments, the machine learning model comprises, or employs use of a Generative Adversarial Network (GAN). This is a type of unsupervised machine learning algorithm or model which uses a starting set of training data to generate or augment the training examples. GANs have been used in multiple image processing applications such as data augmentation, segmentation, and image translation. One of the most popular architectures for GAN-based image translation is pix2pix. Another suitable architecture known in the art is the CycleGAN architecture.

A further method will now be outlined. This may form a separate aspect of the invention, or it may form an embodiment of the invention outlined above, wherein the features described herein below may be combined with those according to any of the embodiments outlined above.

The method comprises the following steps:
processing source 3D image data of the anatomy of the patient to generate: a first 2D image representing a view of the anatomy across a first view plane, the first view plane representing a view from a first angular position relative to the anatomy, and to generate a second 2D image representing a view of the anatomy across a second view plane, the second view plane representing a view from a second angular position relative to the anatomy;
obtaining an indication of one or more volumetric sub-regions within the source image data which each contains a respective anatomy of interest;
for each of the one or more volumetric sub-regions, extracting from the source image data at least a first and second 2D slice through the respective sub-region, corresponding to views through the respective sub-region, and each 2D slice being orthogonal to both the first and second view planes; and
controlling a user interface to display a representation of: the first 2D image, the second 2D image, a boundary outline of each volumetric sub-region superposed on the first 2D image and second 2D image, and each of the generated 2D slices.

The first and second 2D slices may be slices at each of a first and second position relative to a length of the sub-region along an axis normal to the slices.

By way of example, the first view plane may represent a view from a first position along an angular/rotation axis of the medical imaging apparatus, and the second view plane may represent a view from a second position along the angular/rotation axis.

In some embodiments, the source 3D image data may be the first 3D image data referred to earlier (i.e. the survey image data). In some embodiments, it may be the simulated image data referred to earlier.

This provides a highly efficient means for utilizing a 3D imaging dataset for scan planning. In effect, the method comprises presenting two sets of images, one set (representing the first and second 2D view planes mentioned above) from a first angle through the image volume, and a second (the 2D slices referred to above) from a different, orthogonal, angle through the image volume, and wherein the second set of images represent slices through sub-portions of the view depicted in the first set of images.

The volumetric-sub-portions for example may represent volumetric regions which are planned to be scanned during a subsequent full diagnostic scan. The first and second 2D images may represent survey views, spanning at least a portion of a vertical axis of the subject anatomy. The 2D slices may represent planned slice images to be acquired as part of the diagnostic scan. For example, the image data is tomographic image data, comprising a 3D image dataset composed of a plurality of 2D image slices. In some examples, the first and second positions of the first and second 2D image slices may correspond to positions at each of a first and second (opposite) end of the volumetric region, along an axis orthogonal to the slices. In other words, the image slices may represent first and last image slices along the length of the volumetric region.

In some embodiments, the first and second 2D images may be generated by applying a volume rendering method to the source 3D image data. In some embodiments, each of the 2D slices may be generated by extracting a 2D slice through the 3D image data.

In some examples, the volume rendering method may be a 3D projection rendering method such as ray-casting, e.g. Maximum Intensity Projection (MIP) or Average Intensity Projection (AIP). Extraction of a 2D slice means, where the source 3D image data comprises a volume of voxel values, extracting a slice of voxel values along a certain slice through the volume.

Volume rendering, or 3D rendering, is an image rendering technique which is used to display a 2D projection of a 3D image data set. A 3D image can be understood as a regular volumetric grid of pixels. Generating the 3D representation utilizes image data from a plurality of slices. One example technique is volume ray casting in which sampling rays are notionally projected through the 3D image dataset toward (and potentially through) an image plane, and wherein each pixel value in the image plane is determined based on values of the set of pixels intersected by the respective ray which is projected onto it.

In other examples, each of the 2D images may be generated based on voxel values within the source image data set which span the respective view plane comprised by the 2D image.

In some embodiments, the method further comprises receiving from the user interface a user-indicated adjustment of the volumetric sub-region, and optionally wherein the adjustment is a change in a position of the volumetric sub-region relative to the patient anatomy, or a change in the volume defined by the sub-region.

In some embodiments, the method comprises controlling the user interface so that, responsive to the user indicating the adjustment to the sub-region, the displayed boundary of the sub-region is automatically adjusted in accordance with the user-indicated adjustment. In this way the user can graphically adjust the anatomical sub-region.

In some examples, the user interface may comprise a touch-screen display and wherein the user-indicated adjustment is input through touch, e.g. dragging a boundary to indicate an adjustment to the position of the sub-region relative to the anatomy, or dragging a section of a boundary to indicate a change to the volume defined by the boundary.

In some embodiments, responsive to receipt of the user-indicated adjustment of a given sub-region, the method further comprises extracting a new 2D slice through each volumetric sub-region for each of the first and second positions, and displaying the new 2D slices in place of the 2D slices previously displayed on the user interface.

In some embodiments, the obtaining the indication of the sub-region of interest comprises applying an image analysis operation to the source image data to detect an anatomical object of interest, and subsequently determining a volumetric subregion in dependence upon a boundary of the identified anatomical object of interest within the image data. The image analysis operation may comprise anatomical image segmentation.

The method may further comprise controlling the medical imaging apparatus to capture second 3D image data of one or more volumes which together include all of the volumetric sub-regions.

A further method will now be outlined. This may form a separate aspect of the invention, or it may form an embodiment of the invention outlined above, wherein the features described herein below may be combined with those according to any of the embodiments outlined above.

The method comprises the following steps:
identifying a slab of interest within 3D source image data, wherein a slab is a volumetric region consisting of a consecutive stack of image slices in the source image data;
extracting a stack of image slices from the source image data corresponding to the slab of interest;
generating a volume rendering of the slab of interest; and
displaying the volume rendering on a user interface.

The 3D source image data may in some embodiments be the first image data previously referred to (i.e. survey image data). The 3D source image data may in some embodiments be the simulated image data previously referred to.

The slab is a volumetric block of interest within the image data.

The volume rendering may employ a direct volume rendering technique such as 3D projection rendering. 3D projection rendering means a rendering of the volumetric data in a 2D image, through a ray casting method. Maximum intensity projection (MIP) and average intensity projection (AIP) are two examples for instance.

In some embodiments, the method further comprises: applying an image analysis operation to identify an anatomical region of interest in the source image data; and identifying the slab of interest within the source image data in dependence upon the identified anatomical region of interest by setting a position and thickness of the slab within the image data so as to overlap with at least a portion of the anatomical region of interest.

For example, the method may comprise using anatomical image segmentation to detect one or more anatomical objects, and wherein the anatomical region of interest is a region occupied by an anatomical object of interest.

A projection direction or angle of the projection rendering may be set in dependence upon the anatomical image segmentation. For example, the direction of the rays cast through the slab (i.e. the observer viewpoint set for the projection), and/or an orientation of the image plane set for the ray casting may be determined in dependence upon the segmentation, for example so as to depict a particular view of the anatomy, or a particular portion of the anatomy.

In some embodiments, where the source image data is the first image data; the method may further comprise applying denoising to the first image data in advance of applying the image analysis operation.

These and other aspects of the invention will be apparent from and elucidated with reference to the embodiments) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows an exemplary medical imaging apparatus;
Fig. 2 shows a block diagram of an example system and processing arrangement in accordance with one or more embodiments;
Fig. 3 illustrates example simulated scan data compared to standard survey image data for a first example machine learning algorithm;
Fig. 4 illustrates example simulated scan data compared to standard survey image data for a further example machine learning algorithm;
Fig. 5 illustrates an example graphical user interface display controlled to display a representation of simulated image data and 3D survey image data;
Fig. 6 illustrates an example graphical user interface display controlled to display a visualization of source 3D image data which includes two 2D image views from a first and second viewing angle, and a set of 2D image slices through the anatomy from an orthogonal viewing angle;
Fig. 7 illustrates generation of a 3D rendered view of a selected slab region of a source 3D image data set; and
Fig. 8 illustrates a graphical user interface display controlled to display a selected slab region of a source 3D image data set to be visualized.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides methods related to survey scanning in diagnostic medical imaging. At least one aspect relates to a method for generating, using a machine learning model, a simulation of medical image data in accordance with a defined set of acquisition parameters for a medical imaging apparatus, based on processing of an initial 3D image data set (e.g. a survey image dataset). At least one aspect relates to a method for visualizing a first 3D image dataset (e.g. a 3D survey image dataset, or a simulated 3D image dataset) in a manner which facilitates subsequent diagnostic scan planning, based on extracting two sets of 2D image views, wherein the first set of 2D images represent views of the anatomy which span a first directional axis, and wherein the second set of 2D image views represent views of slices through the anatomy at different selected points along said first axis, and spanning a second directional axis, orthogonal to the first. At least one aspect of the invention relates to a method for visualizing a first 3D image dataset (e.g. a 3D survey image dataset, or a simulated 3D image dataset) in a manner which facilitates subsequent diagnostic scan planning, based on extracting a 3D sub-region of the first 3D imaging dataset, and generating a volume rendering of the sub-region, where the sub-region may be a slab region consisting of a stack of slices through the anatomy. These aspects can be combined or provided separately.

Various embodiments of the present invention, to be described in detail further below, may, but not necessarily, comprise one or more of the following features.

In at least some embodiments, an aim is to provide an automatic algorithm to simulate and preview the look of diagnostic scan data (for example CT data) using image data from a lower-resolution 3D survey scan as input data, and based on a selected set of scanner acquisition settings. Lower resolution in this context means that the survey scan (first scan) has lower spatial resolution in one or more dimensions than the subsequent diagnostic scan (second scan).

For example, in the case of CT imaging, this means that the survey (first) scan administers a lower radiative dose than the diagnostic (second) scan.

In at least some embodiments, a Generative Adversarial Network (GAN)-based image translation approach is used for simulating the diagnostic images from the 3D survey images.

In at least some embodiments, for a given set of scanning parameters selected by the operator, the algorithm generates a preview of the resulting scan images based on processing of the input 3D survey image data.

In various embodiments of the present invention, to be described in detail further below, the derived simulated image data may be utilized for one or more of the following functions.

One function is for the adjustment or optimization of scan parameters for acquiring the second scan. For example, the technologist may generate simulations for a plurality of different sets of scan parameters, and select a set of scan parameters for the diagnostic scan based on the results. Several preview images corresponding to the different settings accordingly could be generated so that the technologist can directly select from the preview images (using a graphical user interface), and accordingly select the corresponding set of scan parameters.

Another function may be to facilitate automated selection of scan parameters for the second scan. The process of the selection of scan parameters for the diagnostic scan could be automated through application of an image quality analysis algorithm to each of a plurality of sets of simulated image data (each simulated with different scan parameters), and selecting the scan parameters for the second scan based on the quality results. The automated selection of scan parameters could additionally take account of an automatically calculated radiation dose associated with each respective set of imaging parameters.

Another function may to assist directly in diagnostic analysis by a medical practitioner.

In some embodiments, information such as estimated radiative dose which would be delivered to the patient (e.g. CT Dose Index, Dose Length Product, equivalent dose, or another dose metric) might be presented on a graphical user interface display in combination with the simulated preview images themselves, such that the operator may make an informed decision regarding the optimal parameters for the subsequent diagnostic scan.

Embodiments of the method of the invention involve receiving image data from a medical imaging apparatus.

The principles of the inventive concept are not limited to use with any particular type of medical imaging apparatus. However, they are most advantageously applicable for tomographic imaging such as x-ray Computed Tomography (CT) scanning and MRI scanning.

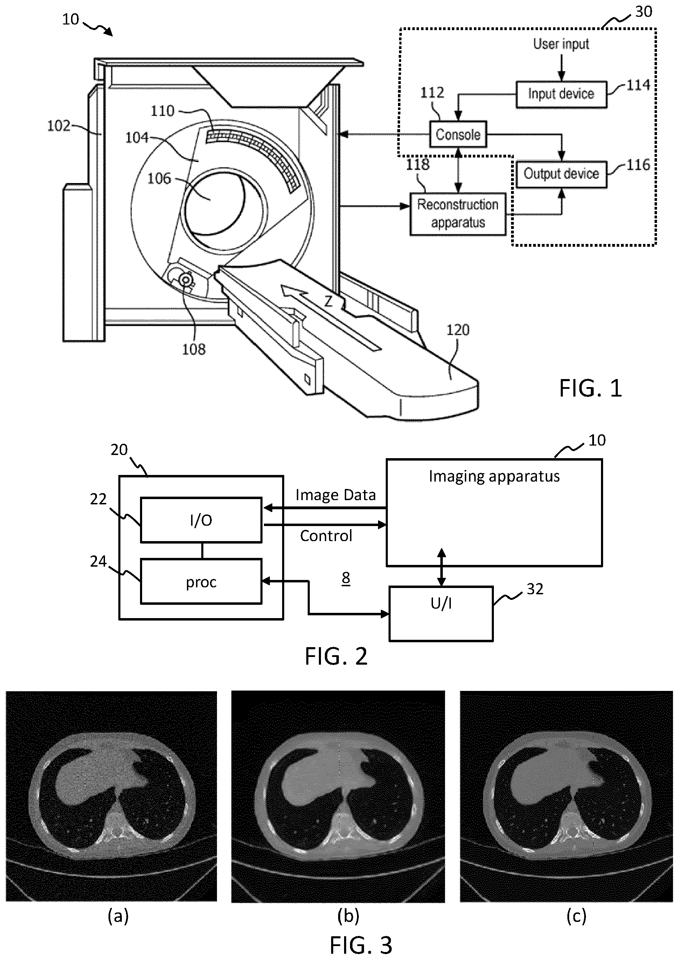

To assist in illustrating the principles of the invention, an exemplary medical imaging apparatus is shown in Fig. 1. The imaging apparatus 10 in this illustration is an x-ray computed tomography (CT) scanner.

The imaging apparatus 10 includes a generally stationary gantry 102 and a rotating gantry 104. The rotating gantry 104 is rotatably supported by the stationary gantry 102 and rotates around an examination region about a longitudinal, axial, or z-axis.

A patient support 120, such as a couch, supports an object or subject such as a human patient in the examination region. The support 120 is configured to move the object or subject for loading, scanning, and/or unloading the object or subject. The support 120 is movable along an axial direction, that is, it is moveable along the direction of the z-axis or the longitudinal axis. Moving the support changes the axial position of the rotating gantry relative to the support (and thus relative to the subject who is supported by it).

A radiation source 108, such as an x-ray tube, is rotatably supported by the rotating gantry 104. The radiation source 108 rotates with the rotating gantry 104 and emits radiation that traverses the examination region 106.

A radiation sensitive detector array 110 subtends an angular arc opposite the radiation source 108 across the examination region 106. The detector array 110 includes one or more rows of detectors that extend along the z-axis direction, detects radiation traversing the examination region 106, and generates projection data indicative thereof.

The rotation of the gantry 104 changes an angular or rotational position of the scanner relative to the subject, and movement of the support along the z-axis changes the axial position of the scanner relative to the subject.

A typical scan will be configured in advance with a scan protocol. A scan protocol comprises a plurality of scanning parameters. The scanning parameters define, among other things, a spatial range of the scan relative to the axial and rotation axes of the scanner. For example, the scan parameters may include boundaries (that is, start and end points) of a scan range along one or more of the axes of the imaging apparatus, for example one or both of the rotational and axial axes. The scan range defines the field of view (FOV) over which imaging data is acquired during the scan. The scanning parameters may typically also include a number of other parameters including for example tube current, tube voltage, scan spatial resolution, scan temporal resolution, and/or fan angle. The resolution parameters may be defined by a speed of rotation of the gantry 104 and the speed of axial movement of the support 120 through the gantry.

A general-purpose computing system or computer serves as an operator console 112 and includes an input device(s) 114 such as a mouse, a keyboard, and/or the like and an output device(s) 116 such as a display monitor, a filmer or the like. The console, input device(s) and output device(s) form a user interface 30. The console 112 allows an operator to control operation of the system 100.

A reconstruction apparatus 118 processes the projection data and reconstructs volumetric image data. The data can be displayed through one or more display monitors of the output device(s) 116.

The reconstruction apparatus 118 may employ a filtered-back-projection (FBP) reconstruction, a (image domain and/or projection domain) reduced noise reconstruction algorithm (e.g., an iterative reconstruction) and/or other algorithm. It is to be appreciated that the reconstruction apparatus 118 can be implemented through a microprocessor(s), which executes a computer readable instruction(s) encoded or embed on computer readable storage medium such as physical memory and other non-transitory medium. Additionally or alternatively, the microprocessor(s) can execute a computer readable instruction(s) carried by a carrier wave, a signal and other transitory (or non, non-transitory) medium.

Fig. 2 shows a block diagram of an example system 8 in accordance with one or more embodiments of the present invention. The system comprises a processing arrangement 20 which comprises an input/output (I/O) 22 or communication module for connecting in use to a medical imaging apparatus 10, and further comprises one or more processors ("proc") 24 adapted to carry out steps of a computer implemented method, which will be described below. The system may comprise the medical imaging apparatus, or the medical imaging apparatus may be external to the system and communicatively coupled with it.

The system may further comprise a user interface (UI) 32 communicatively coupled with the processing arrangement 20. The user interface may comprise a display with a screen for displaying a visual output to a user. The user interface may provide a graphical user interface. The user interface may also include means for generating other sensory outputs, such as acoustic output. The user interface may be a computer console comprising a display screen, a user input device, and a processor. The display screen may be touch-screen display, and may thereby integrate the user input device. Alternatively, the user input device may comprise a keyboard and/or pointer device (e.g. mouse pointer).

As mentioned above with reference to Fig. 1, in some cases, the imaging apparatus 10 may comprise its own user interface 30. In some examples, the user interface of the imaging apparatus may be used to perform the role of the user interface 32 of the system. In other examples, the system may comprise its own user interface.

The processing arrangement 20 forms an aspect of the invention by itself. The aforementioned computer-implemented method, which the processing arrangement is configured to implement, also forms another independent aspect of the invention.

An example computer-implemented method for simulating a preview of medical imaging scan data based on initial survey scan data, in accordance with at least one set of embodiments of the invention will now be outlined in summary, before expounding further on the features and different possible embodiments of the method.

The method comprises receiving from a medical imaging apparatus 10 first image data of an anatomy of a patient, wherein the first image data is 3D image data. The first image data for example may be survey scan data. The method may comprise issuing a control signal to cause the medical imaging apparatus to acquire the first image data, or the method may comprise passively receiving the image data whose acquisition was controlled independently.

The method further comprises obtaining an indication of at least a first set of one or more candidate imaging scan parameters for a subsequent imaging scan to be performed on the anatomy. The candidate scan parameters may be derived by the method, or they may be received from an external source, e.g. a user interface. They might be retrieved from a datastore in other examples.

The method further comprises retrieving from a datastore a machine learning model, wherein the machine learning model is trained to perform image-to-image translation, and is adapted to receive as an input at least a subset of a 3D image dataset of an anatomy, and is adapted to generate as an output simulated image data of the anatomy, wherein the simulated image data simulates an expected appearance of the image data which would be acquired from the medical imaging apparatus if run with said at least first set of candidate scan parameters. The reference to an at least subset of the 3D image dataset means that the model could be configured to handle receipt of a full 3D image dataset and to generate an output comprising a full simulated 3D image dataset. In other cases, the model may be configured to receive for instance one 2D image slice of a 3D image dataset at a time, and generate an output simulation for this particular 2D slice, and wherein slices of the source 3D image dataset are fed to the model one at a time, with the simulated 3D image dataset then compiled from the totality of simulated slices. The skilled person will recognize that there are model architectures that could handle either case, or a data handling algorithm could readily be built around the core machine learning algorithm(s), such that the model can handle received datasets of different types. Details of the machine learning model will be outlined further later.

The method further comprises processing the first image data using the machine learning model, to obtain simulated image data.

The method may further comprise generating a data representation of the simulated image data, e.g. a data packet containing the simulated image data for export, and/or for further use in subsequent processing steps.

The method may further comprise acquiring second image data of the anatomy using the medical imaging apparatus with a second set of imaging scan parameters, wherein the second set of parameters may be the same or different to the first set of parameters.

In at least one set of embodiments, the method further comprises controlling a user interface 32 to display a visual representation of the simulated image data.

In at least one set of embodiments, the method further comprises adjusting the first scan parameters, so that the second scan parameters are different to the first. In some embodiments, adjustment of the first scan parameters to derive the second scan parameters is performed in dependence upon a user input received from a user interface 32. Additionally or alternatively, in at least some embodiments, adjustment of the first scan parameters to derive the second scan parameters is performed at least in part by an automated adjustment operation, in dependence upon processing applied to the derived simulated image data, for example based on a quality assessment indicator derived from processing of the simulated image data.

The first 3D image data referred to above may be acquired using a first scan which is a survey scan. The first image data may have lower spatial resolution for example that the subsequent second scan. The subsequent second scan may be termed a 'full scan' or 'diagnostic scan', and this may be a higher resolution image data set than the first (survey) scan. The first image data set may contain a smaller amount (size) of image data than the second image data set.

The method may comprise retrieving the machine learning model from a datastore, for example from a database stored on a datastore. The machine learning model may be retrieved from the database based on querying the database according to the at least first set of candidate scan parameters. The database may store a plurality of differently trained versions of the same machine learning model, each training according to a different set of imaging scan parameters, i.e. each trained to simulate the appearance of image data acquired with a different set of imaging scan parameters.

One example implementation will now be outlined in detail to illustrate the invention.

This implementation is based on use of a deep convolutional neural network (CNN) to perform the image-to-image translation from the 3D survey scan image data to the simulated preview image data. In particular, a Generative Adversarial Network is one preferred architecture.

By way of introduction, recent advancements in the form of encoder-decoder based Convolutional Neural Network (CNN) architecture and Generative Adversarial Networks (GANs) have led to many promising image-to-image translation applications.

A convolutional encoder-decoder network is a standard network used for tasks requiring dense pixel-wise predictions like semantic segmentation or contour segmentation. The encoder-decoder model is a way of using recurrent neural networks for sequence-to-sequence prediction problems. The approach involves two recurrent neural networks, one to encode the input sequence, called the encoder, and a second to decode the encoded input sequence into the target sequence called the decoder. The input sequence can be read in entirety and encoded to a fixed-length internal representation. In the present application, namely image-to-image translation, the sequences are sequences of pixel values.

Reference is made for example to the paper: Ronneberger O, Fischer P, Brox T. "U-net: Convolutional networks for biomedical image segmentation." In: Medical image computing and computer-assisted intervention—MICCAI 2015—18th international conference Munich, Germany, October 5 - 9, 2015, Proceedings, Part III; 2015. p. 234―41. This paper describes a deep convolutional neural network model for biomedical image segmentation.

Generative adversarial networks (GAN) are a type of machine learning model which seeks to identify a probability distribution underlying a provided training dataset, and then use this to generate new training data entries which can then be further used to refine the predictive network. Within the field of machine learning, the most common type of machine learning is supervised machine learning. Here, a set of training data is constructed manually by a supervising human, who labels each training data entry with its corresponding ground truth, or the target output of the predictive model. The training of such models is limited due to the need for human input to annotate each training data entry. Generative networks are a type of machine learning which is non-supervised, and in particular which can computationally augment a starting training dataset to create a far greater set of training examples than would be possible in supervised learning. Image-to-image translation is an ideal application for GAN networks.

Reference is made for example to the paper Goodfellow I, et al. "Generative adversarial nets." In: Communications of the ACM, November 2020, Vol. 63 No. 11, Pages 139-144. This paper outlines in detail the principles behind the construction of a suitable Generative Adversarial Network. Section 3 in particular outlines the basic architecture of a Generative Adversarial Network, and also provides further references which expand on key points.

The paper Goodfellow, I, et al: "Generative adversarial nets." In Proceedings of the 27th International Conference on Neural Information Processing Systems - Volume 2 (NIPS'14). MIT Press, Cambridge, MA, USA, 2672-2680 provides a further explanation of the structure of Generative Adversarial Networks.

Reference is further made to the paper Alotaibi, A. "Deep Generative Adversarial Networks for Image-to-Image Translation: A Review." Symmetry 2020, 12(10), 1705. This paper provides a detailed overview of the use of GAN algorithms for image-to-image translation.

Two advantageous GAN architectures known for use in image-to-image translation are pix2pix and CycleGAN. The pixp2pix architecture is more appropriate for cases in which the available training data are paired, and CycleGAN is more appropriate for cases in which the available training data are non-paired. To explain further, the aim in the context of the present application is for the trained GAN-based machine learning model to take as input a 3D image dataset (or individual 2D slices from the 3D image dataset, taken one at a time) from the survey scan, and to produce as output a 3D image dataset (or set of 2D slices) which simulates the appearance of the same anatomy if captured in a full diagnostic scan with a certain set of scan parameters. For training a machine learning model to perform this image-to-image translation task for a certain set of scan parameters, the training data would comprise a plurality of sets of first (survey scan) image data, and a plurality of sets of second (full diagnostic scan) image data, the latter of which was captured with the appropriate set of scanner settings. Paired training data in this context would mean that each set of set second image data had a corresponding one of the sets of first image data with which it was paired, meaning that it represented the actual diagnostic scan data that was captured following that set of survey scan data. Unpaired training data would mean that the sets of first image data and sets of second image data could all relate to images of different specific individuals, but wherein the model is nonetheless able to identify patterns common to the first and second image data sets, and generate a general network capable of mapping the one class of image data to the other. CycleGAN is able to handle unpaired training data.

Reference is made to the paper: P. Isola, J. et al, "Image-to-Image Translation with Conditional Adversarial Networks," 2017 IEEE Conference on Computer Vision and Pattern Recognition (CVPR), 2017, pp. 5967-5976. This paper describes the pix2pix architecture.

Reference is also made to the paper: J. Zhu, T. Park, P. Isola and A. A. Efros, "Unpaired Image-to-Image Translation Using Cycle-Consistent Adversarial Networks," 2017 IEEE International Conference on Computer Vision (ICCV), 2017, pp. 2242-2251. This paper describes the CycleGAN architecture.

These papers (Isola et al, and Zhu et al) provide full details of appropriate GAN-based machine leaning algorithms for application in embodiments of the present invention.

Deep learning networks can even be used to perform cross-modality image translation such as translating CT images to MRI images. Reference is made for example to Jin CB, Kim H, Liu M, et al. Deep CT to MR Synthesis Using Paired and Unpaired Data. Sensors (Basel). 2019;19(10):2361.

To generate the machine learning model(s), once the appropriate model architecture has been selected (e.g. pix2pix or CycleGAN described above), the model must be trained to perform the needed image-to-image translation between the survey scan data and the diagnostic scan data with a particular set of scanning parameters.

The initial training data set can be constructed from real-world image data acquired during survey scans of patient anatomies and during full diagnostic scans with a certain set of scan parameters set. The model may be anatomy-specific, i.e. trained for translating images of a particular anatomical region only. This might lead to slightly more accurate results. Alternatively, it could be non-anatomy-specific, capable of handling image data of any anatomical area.

For purposes of demonstration, example GAN-based machine learning models were built by the inventors using each of the pix2pix and CycleGAN architectures.

Fig. 3 illustrates the results of application of image-to-translation to generate simulated image data, using a model constructed using the CycleGAN architecture. The model was trained on paired 3D survey and diagnostic CT images for the chest anatomy. The axial slices were resized to 256x256 pixels and intensities were normalized in the 0-255 range, as required by the CycleGAN network. The CycleGAN network was trained for 400 epochs, with a batch size of 5, on paired 2D axial slices from 9 training subjects, while the data from one subject was kept for testing.

Fig. 3(a) shows an axial slice of a chest 3D CT survey image. Fig. 3(b) shows a simulated diagnostic CT image generated by the machine learning model. Fig. 3(c) shows, for comparison, the original diagnostic CT image (i.e. the image of which Fig. 3(b) is a simulation).

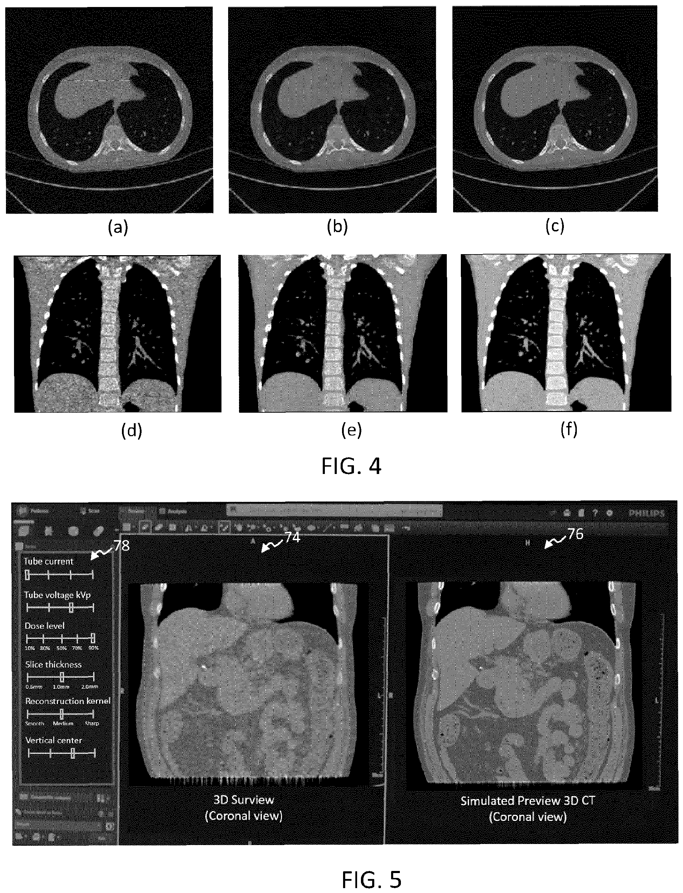

Fig. 4 illustrates the result for the same test case using a model constructed with the pix2pix architecture. Figs. 4(a)-(c) show results for an axial slice of the chest anatomy, while Figs. 4(d)-(f) show results for a coronal slice of the chest anatomy.

Fig. 4(a) shows a chest 3D CT survey image. Fig. 4(b) shows a simulated diagnostic CT image generated by the machine learning model. Fig. 4(c) shows for comparison the original diagnostic CT image (i.e. the image of which Fig. 4(b) is a simulation).

Fig. 4(d) shows a coronal chest 3D CT survey image. Fig. 4(e) shows a simulated diagnostic CT image generated by the machine learning model. Fig. 4(f) shows for comparison the original diagnostic CT image (i.e. the image of which Fig. 4(e) is a simulation).

The method according to embodiments of the invention applies to the first image data a machine learning model which has been trained to generate simulated second image data in accordance with a particular set of candidate imaging scan parameters. The method may comprise accessing a datastore to retrieve an appropriately trained machine learning model for example.

In particular, in accordance with at least one set of embodiments, the method may comprise accessing a datastore storing a plurality of versions of a machine learning model, each respective version trained to output simulated image data which simulates an expected appearance of the input image data if acquired from the medical imaging apparatus run with a different respective set of candidate scan parameters. The method may comprise, based on the obtained first set of candidate scan parameters, retrieving from the datastore one of the versions of the machine learning model, in dependence upon the obtained at least first set of candidate scan parameters. The retrieved version can then be applied to the received first image data.

A datastore having a plurality of versions of the machine learning model, trained to simulate image data acquired with different particular configurations of the scan parameters, could form part of the system 8 in accordance with one or more embodiments.

In some embodiments, to handle translation of a full 3D image dataset, the translation may be performed one 2D slice at a time. In other words, the first image data may comprise a plurality of 2D slice images which together form a 3D image dataset, and wherein the machine learning model is trained to receive as an input a 2D slice image and generate as an output a simulated 2D slice image, and wherein the step of processing of the first image data with the machine learning model comprises applying the machine learning model to each of the 2D slice images of the first image data.

However, this slice-wise 2D approach is not essential. In other examples, the machine learning model may be trained to receive a 3D image, and wherein the output from the model is a simulated 3D image. This 3D approach has been published and is available in open source at the following Internet address: https://github.com/neoamos/3d-pix2pix-CycleGAN.

Although above has been described in some detail the use of GAN architecture for the machine learning model, it will be understood that this is not essential. Other types of machine learning architecture can also be applied to achieve the image-to-image translation. For example other types of convolutional neural network may be used. Also, conditional Generative Adversarial Networks (cGAN) could be used.

To further illustrate embodiments of the invention, there will now be outlined an example workflow for implementation of at least one embodiment of the invention. Although the below descriptions refer for illustration to use of CT image data, it is to be understood that the same steps could be applied equally to image data from any other type of imaging modality, without loss of functionality.

A 3D survey scan is performed to acquire first 3D image data for a particular patient. In addition to the survey image data, other information relevant to the simulating the full diagnostic scan may be acquired, such as the target anatomy, patient data (e.g. demographic information), and optionally a default set of acquisition settings for the imaging apparatus.

A first set of candidate imaging scan parameters for the full diagnostic scan is obtained. This could be input by a user at a user interface, or a default set of imaging scan parameters could be used.

Based on this information, a datastore which stores a plurality of different versions of the machine learning model is queried based on the obtained first set of candidate scan parameters, and the correspondingly trained model is selected from the datastore and applied to the 3D survey image data for estimating a preview diagnostic CT image.

The aforementioned datastore could be a datastore comprised by the system 8, or it could be external to the system 8, and accessible via a network connection or internet connection.

The synthetic preview diagnostic CT image may be presented to the technologist on a display screen of the user interface 32 for review. The technologist may be provided an option to adjust the scan parameters. The method may comprise receiving from the user interface a user-indicated adjusted set of candidate imaging scan parameters, subsequent to display of the simulated image data. The adjusted set of imaging scan parameters could then be used as the second set of scan parameters.

The adjustable scan parameters might include tube-voltage and tube-current. Adjustment of these allows the selection of an optimum compromise between image quality and radiation dose. The adjustable scan parameters might include vertical centering of the patient, by virtually moving the patient and presenting a simulated preview CT image for each setting. This allows for selecting a couch position which results in an optimal image quality and radiation dose. The adjustable scan parameters might include an image resolution setting. The adjustable scan parameters might include reconstruction filter settings.

Upon reviewing the synthesized preview CT images for the desired scan parameter, the technologist could be provided an option via a user control on the user interface to accept and proceed with the initial set of scan parameters. The technologist could also be provided an option to reject the scan parameters.

Additionally or alternatively, the technologist could be enabled, via a set of user controls provided on the graphical user interface, to adjust the scan parameters, and to consequently generate updated simulated image data in accordance with the updated scan parameters.

For example, in some embodiments, the method may comprise: providing on a user interface a user control permitting a user to define a custom set of candidate imaging scan parameters; receiving from the user interface a user-defined custom set of candidate scan parameters; wherein the step of retrieving the machine learning model from the datastore comprises retrieving a machine learning model trained to generate simulated image data which simulates the appearance of image data acquired with the user-defined custom set of candidate scan parameters; and wherein the method further comprises displaying the simulated image data output from the machine learning model on a user interface.

After reviewing the synthesized preview CT images for the different sets of scan parameters, the technologist could select the best configuration for the diagnostic CT image acquisition.

An example is illustrated in Fig. 5 which depicts an exemplary graphical user interface display screen. The user interface is controlled to display one view of the original first image data 74 (the 3D survey or "surview" image data), and the corresponding view rendered from the simulated image data 76. The shown 2D images in each case are rendered views generated from the respective 3D image data sets, e.g. particular 2D slices through the 3D image dataset, or volume renderings (e.g. projection renderings, generated through a ray-casting technique). The user interface further displays a set of user controls 78 permitting a user to adjust each of a plurality of imaging parameters. In the illustrated example, these are tube current, tube voltage, dose level, slice thickness, the reconstruction kernel, and the vertical center position of the anatomy relative to the imaging apparatus. In the illustrated examples, these user controls take the form of adjustable slider bars, but other types of user control could be used, e.g. text boxes by which fully custom quantitative values for the different parameters may be input.

Preferably, though not essentially, the when the user makes a change to the custom scan parameters via the user control 78, this automatically triggers generation of new simulated image data in accordance with the changed custom scan parameters, by retrieving a machine learning model trained to simulate the appearance of image data acquired with the custom scan parameters. The presented simulated image 76 is updated accordingly.

In advantageous examples, the method further comprises applying a quality assessment to the simulated image data to derive a quality indicator for the simulated image data. Thus, the quality of the synthetic preview images obtained for different configurations of scan parameters could be quantified.

In some examples, the quantified quality indicator could be utilized by an automated selection algorithm, wherein the automated selection algorithm automatically generates a plurality of different sets of simulated image data in accordance with different configurations of scan parameters, and selects the configuration resulting in the highest quality indicator value.

Thus, for example, the method may comprise automatically generating a plurality of sets of simulated image data for each of a plurality of sets of candidate imaging scan parameters. For each candidate set of scan parameters, the method may comprise retrieving from the datastore one of the machine learning models (trained according to the corresponding set of scan parameters) and applying the machine learning model to the candidate set of scan parameters to generate a simulated image data set. The plurality of sets of candidate scan parameters to be used may be generated automatically, for example by incrementing each adjustable parameter by regular amounts, to result in a field of candidate scan parameter sets across a scan parameter space.

The method optionally then may further comprise automatically applying a quality assessment to each set of simulated image data to derive a quality indicator for each set of simulated image data. The method may further comprise automatically selecting one of the sets of candidate scan parameters based on comparison of the quality indicators for the different sets of simulated image data (e.g. to identify the simulated image data set with the highest quality indicator). The second set of scan parameters may be set in accordance with the selection.

In some examples the user interface may be controlled to display a visual representation of the selected set of scan parameters and/or a rendered view of the corresponding simulated image data corresponding to the selected set of scan parameters, and to prompt the user for an input indicative of user-approval, user-rejection of the selected set, or a user adjustment of the selected set of scan parameters. The second image data is acquired according to the selected set of scan parameters only responsive to a user input indicative of user-approval. If the user adjusts the parameters, the second set of image data may be acquired in accordance with the adjusted parameters. A further set of simulated image data may be generated in accordance with the user-adjusted scan parameters in some examples and presented to the user on the user interface display screen, and the user prompted again for approval, rejection and/or adjustment.

In other examples, the acquisition of the second image data may be triggered automatically after the automated selection of the set of scan parameters with the highest quality indicator score.

In some embodiments, instead of automatically selecting one of the sets of scan parameters, the method may comprise controlling a user interface to display a visual representation of each set of simulated image data, and an indication of the candidate scan parameters corresponding to each set of simulated image data, and prompting the user for a selection of one of the sets of scan parameters which should be used for the acquisition of the second image data. The method may thus comprise receiving from the user-interface a user-indicated selection of one of the candidate sets of scan parameters, and wherein the second set of scan parameters used for acquiring the second image data is defined by the user selection.

In some examples, the method may comprise controlling the user interface such that the user-indicated selection of one of the candidate sets of scan parameters is achieved through a user-selection of one of the displayed sets of simulated image data. For example, the user is presented with a view rendered from each of the sets of simulated image data, and by selecting one of these, the corresponding set of image scan parameters is selected.

The generated simulation images could also advantageously be utilized for a number of other functions for optimizing imaging workflows, such as: optimizing patient positioning including vertical centering of the patient, and estimation of an extent of a partially missing anatomy though image segmentation. The preview CT images inferred from 3D survey images could be employed for further improvements in such applications.

In particular, the noise patterns in 3D survey images (which would normally be used for these purposes) could pose a risk of reducing quality of the segmentation outcomes or classification approaches listed below. The translation of images from the 3D survey image domain to diagnostic imaging domain results in image enhancement and denoising, thus making these approaches less error-prone and more robust.

The possible further applications of the simulated image data may include one or more of the following:
- Use in scan planning: e.g. through application of a segmentation algorithm, it can be determined if a target anatomy is entirely within an imaging field-of-view.
- Use in estimating a spatial extent of a partially missing target anatomy (incomplete organ coverage). In other words, if a target anatomy is not fully covered by an imaging field-of-view, an estimate can be made, through image segmentation, of a spatial extent of the missing part of the anatomy outside of the imaging field of view.
- Use in adjusting a vertical centering of a patient with respect to the imaging apparatus. For example, in the context of CT imaging, adjusting a vertical centering of the patient relative to the iso-center of the rotatable gantry.
- Use in detecting presence in the imaging field of view of one or more predetermined anatomical features whose presence is undesired. For example, this could include sensitive organs such as eye lenses. Alerts can be generated if such features are detected in the field of view based on the simulated image data.

For each of the above applications, a dedicated algorithm may be applied to the simulated image data after its generation. For example, a technologist could be alerted if the patient is not positioned properly. In some examples, corrected scan parameters such as start and end position of the scan could be proposed to the technologist so that an optimal diagnostic image quality is attained.

It is also possible to train an application specific model which is capable of receiving as an input either the 3D survey image data or the simulated image data.

In accordance with one or more embodiments, the simulated image data could advantageously be used to simulate a bodily uptake of a contrast agent. For example, contrast agents are routinely used in medical imaging, e.g. to enhance the arterial or venous part of the patient's circulation. A dedicated simulation algorithm could be developed and applied to the simulated image data for this purpose. This would allow an operator to predict and plan in advance how a certain scan setup would impact on the imagery that is likely to be obtained in relation to the contrast agent. This could add certainty to the planning of a bolus tracking procedure during which target regions of interest (ROIs) which are to be recurrently imaged during a scan are selected corresponding to one or more landmark locations on the body to monitor the inflow of injected contrast agent.

The placement of these ROIs in advance of a scan may be challenging for an inexperienced operator using only the non-enhanced 3D survey images.

The contrast agent uptake could be simulated for example by processing the simulated image data to detect locations of blood vessels, and then processing the image data so as to assign a higher intensity value to regions in the survey images that represent the vessels. In this way, contrast enhancement of the blood vessels can be artificially simulated by simply altering the pixel/voxel values at locations detected to correspond to blood vessels.

In some examples, this could be achieved using a trained machine learning algorithm. For example, contrast enhancement simulation could be facilitated through training a machine learning algorithm with pairs of contrast-enhanced and non-contrast enhanced versions the same anatomy image. For example, one of each pair of images could be an image acquired of the patient before injection of a contrast agent, and the other an image acquired after injection of the contrast agent. Different models could be trained for simulating different concentrations of contrast agent, injection times, or any other parameter or variable of the contrast enhancement process. i.e. different models could be trained and selected depending on the intended dose and the intended timing. This would enable virtual contrast enhancement.

The simulated image data may also be used for purposes of box planning of scans.

Box-planning or scan-planning is computer-implemented method in which a technologist uses a user interface to draw a box around a target anatomy within a surview image, and wherein the box is used by the system to define a volumetric area for which imaging will be acquired in the full diagnostic scan. This enables an operator to ensure that the target anatomy will be fully covered in the imaging FOV, by ensuring the anatomy is entirely covered in the box. This is followed-by the acquisition of the diagnostic CT image (with the target anatomy in the field-of-view). Advantageously, the simulated image data generated in accordance with embodiments of the present invention may be used in place of the survey data in the box planning, for drawing of the boxes by the operator.

There are other useful functions which can be performed using the first 3D image data (the survey scan data) which help in planning of the subsequent scan, such as in the choosing a start and an end of a scan range, and a FOV.

These functions involve processing of either the first 3D image data, or the simulated image data, so as to generate additional visualizations of particular views of the anatomy, and using these to adjust parameters for the planned subsequent full scan.

One example scheme will now be outlined in detail. This may be used in combination with one or more of the methods described above in which the simulated image data are generated, or may be employed by itself, since it confers significant technical advantages of its own.

By way of introduction, different approaches exist currently for capturing and analyzing a survey scan. Very commonly, only one or more sets of 2D scan data are acquired, representing particular planes through the anatomy, and which can be used to plan the diagnostic scan. For example, in the field of CT scanning, it is common to capture one or more topograms, which are two-dimensional digital radiographs obtained by using rapid pulses from the X-ray tube while the patient moves through the gantry. These are widely used in the CT imaging field, and therefore well understood by clinicians.

There exists furthermore a known technique to generate such images from a 3D survey scan, e.g. a low dose helical scan. Reference is made for example to US9408578B2 which describes a method for establishing a topogram based on spiral acquisition of an examination region using a computed tomography system in a clinical environment. This uses a technique of parallel projection.

However, while the 2D images generated from the helical scan in this method have the benefit that they are similar to the conventional tomograms (and therefore well understood immediately by clinicians), they also have the same limitations and do not leverage the full potential of the volumetric image data obtained during a 3D survey scan.

In particular, in the conventional 2D survey images, the data is acquired from the entire body which makes it sometimes difficult to accurately identify important anatomical details needed for planning. For instance, it is not possible to accurately pre-plan start and end points of the scan range over anatomy, or the target FOV (Field Of View) or angle of the image plane. This causes user to manually modify these attributes after the scan is performed based largely on "guesswork" in an attempt to achieve the correct coverage and orientation of the anatomy. This places a time burden on the scanning procedure, and an uncertainty in the result.

Another disadvantage of conventional 2D survey images is that planning of a bolus tracking during the scan procedure is complex and relies heavily on clinician skill and experience. Bolus tracking is a procedure in which a bolus of indicator/marker material, such as a contrast medium is injected into the patient, and its passage tracked. Usually the scan locations needed for the tracking are very common. Therefore, a common practice, for example in CT imaging, is to perform one 2D survey scan at the planned injection location, and in many cases additional scans at slightly adjacent locations to fine tune the location. The ROI to be captured for tracking the Bolus in the subsequent clinical scan is then set based on the last image acquired.

The method described below provides a different processing approach to 3D survey image data, to provide a different form of visualization, and which provides efficiency improvements in the planning process for the full clinical scan. The method below allows for accurately visualizing the various different scan locations mentioned above during the planning procedure with a single acquired set of 3D survey scan data, and thus saving user time, simplifying manual operation, as well as omitting the additional survey scans in the case of bolus tracking. For irradiating imaging modalities, this also reduces the radiation dose that the patient is exposed to.

In accordance with one or more embodiments of at least one aspect of the invention, a computer implemented method is provided which comprises the following steps:
processing source 3D image data of the anatomy of the patient to generate: a first 2D image representing a view of the anatomy across a first view plane, the first view plane representing a view from a first angular position relative to the anatomy, and to generate a second 2D image representing a view of the anatomy across a second view plane, the second view plane representing a view from a second angular position relative to the anatomy;
obtaining an indication of one or more volumetric sub-regions within the source image data which each contains a respective anatomy of interest;
for each of the one or more volumetric sub-regions, extracting from the source image data at least one 2D slice through the respective sub-region, the 2D slice being orthogonal to both the first and second view planes;
controlling a user interface to display a representation of: the first 2D image, the second 2D image, a boundary outline of each volumetric sub-region superposed on the first 2D image and second 2D image, and each of the generated 2D slices.

By way of example, the source 3D image data may be survey scan data. For example, the source 3D image data may be the first image data discussed previously (i.e. the survey scan data), or the simulated image data discussed earlier.

The first and second view planes may be planes which are parallel to a longitudinal or axial imaging axis, and perpendicular to a rotational imaging axis. The 2D slices may define planes which are normal to the longitudinal or axial axis, and parallel with a rotational axis (or parallel with a radial axis).

In this context, the source 3D image data can be understood as covering an imaging volume having a longitudinal axis, z, and a rotational/circumferential axis, ϕ, thereby defining a cylindrical or tubular imaging volume.

By way of example, the first view plane may represent a view from a first position along an angular/rotation axis of the medical imaging apparatus, and the second view plane may represent a view from a second position along the angular/rotation axis. The first 2D image may represent a view from a start of a planned scan range along the angular/rotational imaging axis. The second 2D image may represent a view from an end of a planned scan range along the angular/rotational imaging axis.

The first view plane may represent a coronal plane.

The second view plane may represent a sagittal plane.

The 2D slices may be axial slice views, meaning views along the longitudinal or axial axis. For each volumetric region, there may be generated at least a first and second 2D slice through each volumetric sub-region. These may in some examples be slices through the volumetric sub-region at each of a first and second position relative to a length of the sub-region along an axis normal to the 2D slices. For example, these may in some examples be slices through the volumetric sub-region at each of a start and end location of the region, which may for example correspond to a planned start and end of a scan range over the region. In other words, they may represent the first and last planned axial slices to be acquired along the at least portion of the planned scan range which will cover the volumetric sub-region. The Field of View (FOV) covered by each 2D slice image may correspond to the width of the volumetric sub-region. The purpose is to allow user to "preview" the future clinical images generated based on the plan.

In some examples, at least a third 2D slice is generated and displayed for at least one of the volumetric sub-regions, representing a view at a position along the volumetric sub-region length between the first and second slices.

Each volumetric sub-region may correspond to a region for which image data is planned to be acquired in the full diagnostic scan. In other words, a planned diagnostic scan may be configured so as to acquire one or more (or all) of the identified volumetric sub-regions. In other words, each volumetric sub-region may represent a region over which imaging data is to be acquired in a subsequent imaging scan. Imaging each sub-region may comprise acquiring image data for reconstructing a series of image slices along a length axis of the volumetric region, each slice being a plane oriented normal to this length axis. This series of slice image can be acquired and reconstructed with different geometry properties such as angle, start/end position, FOV (Field of View), as well as different reconstruction parameters, such as filter parameters, and slice thickness and/or increment. The preview imagery generated according to the above described method can be advantageously used to assist in planning some or all of these imaging parameters.

In some embodiments, the first and second 2D images may be generated by applying a volume rendering method, such as a 3D projection rendering method, to the source 3D image data. However this is not essential, and the 2D view plane images could be generated based on the voxel values of the source 3D image data across each of the first and second view planes.

Each of the 2D slices may be generated by extracting a 2D slice through the source 3D image data. For example the source data is a tomographic volumetric image dataset which is composed of a series of 2D slices, and wherein each of the first and second 2D slices is one of the slices of the volumetric dataset.

A projection rendering method means a ray-casting method such as maximum intensity projection (MIP) or average intensity projected (AIP). Extraction of a 2D slice means, where the source 3D image data comprises a volume of voxel values, extracting a slice of voxel values along a certain plane through the volume.

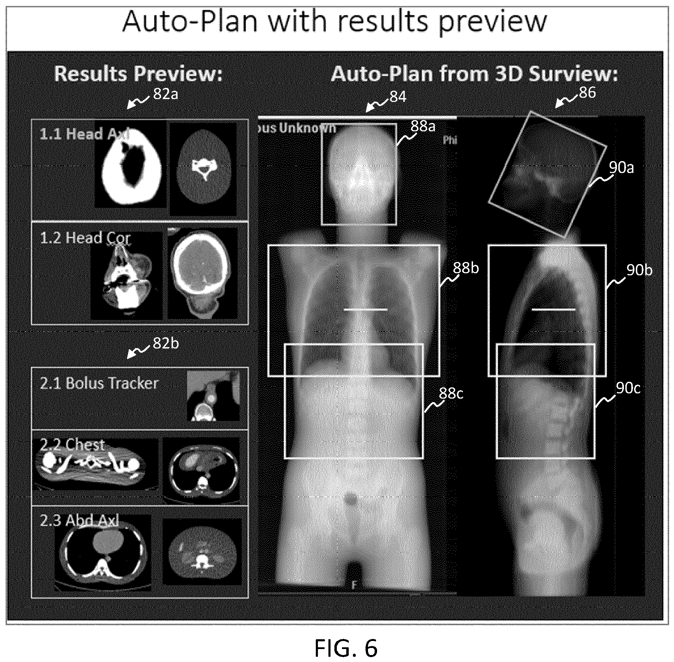

By way of further illustration, an example workflow is described below, with reference to Fig. 6. For illustrative purposes, this is described with reference to CT imaging. However, the sample principles are applicable to any other tomographic imaging modality, for example MRI imaging.

At the beginning of a medical imaging examination, a 3D survey scan is performed to acquire first 3D imaging data. The survey scan may be a low-dose CT scan, e.g. an ultra-low-dose helical scan.

From this a first 2D image 84 representing a first view plane and second 2D image 86 representing a second view plane are generated. These represent synthetic topogram images, spanning a full scan range along an axial or longitudinal axis of the imaging apparatus, and each representing a view from a particular point along an angular range. For example, the two 2D images may be images at two points along a planned imaging series in a given direction, for example a start and end of a given imaging series along a given angular direction. There can be two images (e.g. start and end of the results series in a given direction), three images (e.g. start, end, and middle) or more than three images per planned series. The given direction may be an angular or rotational direction.

An indication of volumetric sub-regions of interest are obtained, and a boundary outline 88a, 88b, 88c, 90a, 90b, 90c of each is rendered as a superimposed boundary around the relevant region atop each of the two 2D image planes 84, 86.

As mentioned above, in some cases, the volumetric sub-regions are automatically placed on the 2D images 84, 86 using pre-knowledge of a pre-defined target anatomy, and based on image segmentation applied to the two 2D synthetic topogram views 84, 86.

Further to this, 2D slices through each of the volumetric sub-regions 88, 90 are extracted from the source 3D image data and are presented 82a, 82b on the user interface display. These include slices corresponding to views through each respective sub-region at each of a first and second location along the sub-region. In particular, the first and second location may correspond to a start and an end of a scan range which spans the volumetric sub-region. For example, these slices may represent previews of the slices which are planned to be captured at the start and end of the at least portion of the scan range which spans the volumetric sub-region. These displayed slices may therefore represent the first and second slices of a planned image series along the volumetric sub-region.

Thus, in this context, the width of the bounding box around the volumetric sub-region reflects the width of the FOV of each image slice that will be captured within the volumetric sub-region.

By way of example, with reference to Fig. 6, here there are three identified volumetric sub-regions displayed on the user interface display screen. A first 88a, 90a sub-region contains the head of the subject. A second 88b, 90b of the volumetric sub-regions contains a chest of the subject. A third 88c, 90c of the volumetric sub-regions contains an abdomen of the subject.

Preview image slices for the head 88a, 90a volumetric sub-region are shown in preview boxes indicated at 82a. Preview image slices for the chest 88b, 90b and abdomen 88c, 90c sub-regions of the subject are indicated at 82b.

By showing the outline of the volumetric sub-region relative to both the first 84 and second 86 view planes, which represent different rotational positions around the subject, it is possible for the operator to see the full 3D geometry/shape of the volumetric sub-region. For instance, a tilt angle of the volumetric sub-region can be seen. For example, the head sub-region box 88a, 90a is tilted relative to the second plane 86 view.

In some embodiments, the method may comprise controlling the user interface to permit input by a user of a user-indicated adjustment of the volumetric sub-region. For example, the adjustment may be to change a position of a volumetric sub-region relative to the patient anatomy, or to change the volume defined by the sub-region.

In some examples, the method may comprise controlling the user interface so that, responsive to the user indicating the adjustment to the sub-region, the displayed boundary of the sub-region is automatically adjusted in accordance with the user-indicated adjustment. In this way the user can graphically adjust the anatomical sub-region.

For example, the user-indication of the change to the volumetric sub-region could be achieved through a user dragging the visually rendered position of the outline box 88a, 88b, 88c shown on the screen surrounding the volumetric region.

In some examples, the user interface may comprise a touch-screen display and wherein the user-indicated adjustment is input through touch, e.g. dragging a boundary to indicate an adjustment to the position of the sub-region relative to the anatomy, or dragging a section of a boundary to indicate a change to the volume defined by the boundary.

Preferably, responsive to receipt of the user-indicated adjustment of a given sub-region, the method further comprises extracting a new 2D slice through each volumetric sub-region for each of the two positions relative to the length of the sub-region, and displaying the new 2D slices in place of the 2D slices previously displayed on the user interface.

In other words, when the user manipulates the boxes 88, 90 representing the volumetric sub-regions relative to the 2D view plane images 84, 86 (e.g. move, resize, rotate), the preview slice images 82a, 82b are recalculated in real time, so the user can immediately preview the appearance of the final results- in terms of geometry (not necessarily the image quality).

In the case of bolus tracking, the planned imaging location for the bolus tracking may be defined by one of the volumetric sub-regions, so that a boundary surrounding this location is displayed relative to each of the two 2D view planes 84, 86, and an axial slice corresponding to the tracking position is displayed.

In some examples, the sub-region of interest is automatically identified through anatomical image analysis, e.g. through anatomical image segmentation. In particular, the obtaining of the indication of the sub-region of interest may comprise applying an image analysis operation to the source image data to detect an anatomical object of interest, and subsequently determining a volumetric-subregion in dependence upon a boundary of the identified anatomical object of interest within the image data.

In some examples, the first 2D image and second 2D image may be generated by extracting a 2D slice from the source 3D image data at a pre-defined depth and corresponding to the view at first and second angular positions. Alternatively, the first 2D image and second 2D image may be generated by a volume rendering method, e.g. a projection rendering method applied to the full source 3D image dataset.

The method may further comprise controlling the medical imaging apparatus to capture second 3D image data of one or more volumes which together at least encompass or contain each of the volumetric sub-regions.

Although the above method is illustrated with an example taken from the field of x-ray CT scanning, it might also be applied for survey scanning in other 3D imaging modalities, such as (by way of non-limiting example) MRI scanning.

A further example scheme will now be outlined in detail. This may be used in combination with one or more of the methods described above, e.g. the method in which the simulated image data are generated, or the method in which the 3D survey scan data are efficiently visualized, or it may be employed by itself, since it confers significant technical advantages of its own.

By way of introduction, conventional 2D survey images, such as Topograms in the field of CT imaging, effectively "compresses" (in the x-ray beam direction) the entire volume into a single image. Thus many anatomical details become difficult to identify, which compromises the scan planning process.

Since a 3D survey image provides an entire volume of image data, a volumetric slab or block region with a given thickness can be generated instead of, or in addition to, 2D survey images. The slab can then be rendered for presentation in a 2D image using various 3D rendering techniques, such as Average Intensity Projection (AIP) or Minimum Intensity Projection (MIP). This increases the image quality significantly.

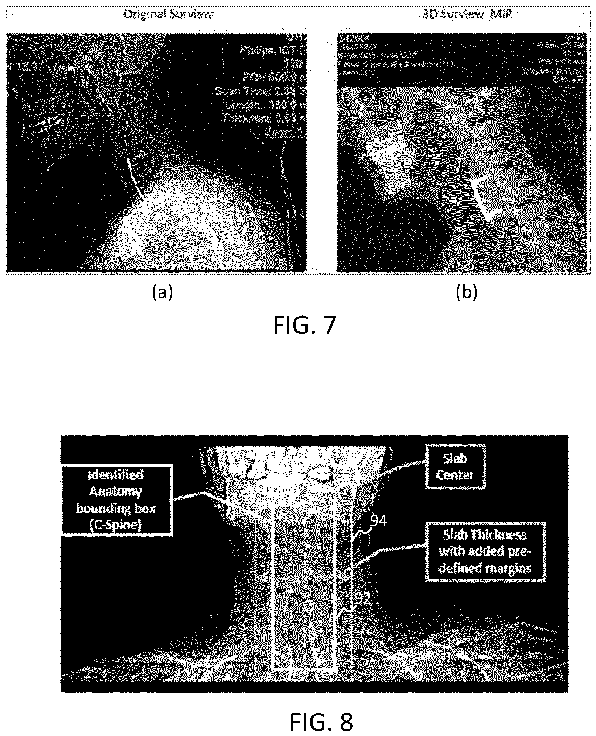

By way of illustration, reference is made to Fig. 7 which shows a comparison between a conventional 2D Topogram image (Fig. 7(a)) of a neck region and a 2D image (Fig. 7(b)) rendered from a volumetric slab of image data, extracted from a 3D survey scan image dataset. As will be apparent, in the 2D image rendered from the volumetric slab, the image detail is far finer.

Thus, according to one or more embodiments of at least one aspect of the invention, there is provided a computer implemented method which comprises the following steps:
identifying a slab of interest within 3D source image data, wherein a slab is a volumetric region consisting of a consecutive stack of image slices in the source image data;
extracting a stack of image slices from the source image data corresponding to the slab of interest;
generating a volume rendering of the slab of interest; and
displaying the volume rendering on a user interface.

The 3D source image data may for example be survey image data. It may be the first image data referred to earlier in this disclosure. It may be the simulated image data referred to earlier in this disclosure.

The slab is a volumetric block of interest within the image data.

The volume rendering may employ a direct volume rendering technique such as 3D projection rendering. The 3D projection rendering means a rendering of the volumetric data in a 2D image, through a projection ray casting method. Maximum intensity projection (MIP) and average intensity projection (AIP) are two examples for instance.

The region covered by the slab of interest may be automatically detected using image segmentation techniques in some examples.

Thus, according to some embodiments, the method may further comprise: applying an image analysis operation to identify an anatomical region of interest in the source image data; and identifying the slab of interest within the source image data in dependence upon the identified anatomical region of interest by setting a position and thickness of the slab within the image data so as to overlap with at least a portion of the anatomical region of interest. The anatomical region of interest may be a region occupied by an anatomical object of interest.

By way of illustration, an example workflow for this scheme will now be outlined below, with reference to Fig. 8. This is described with reference in particular to CT imaging, but it is to be understood that the same principles may be applied equally to other imaging modalities, particularly other tomographic imaging modalities, e.g. MRI imaging.

At the beginning of the examination, first 3D survey image data is acquired. In some examples for instance, this may be a low-dose helical scan. Instead of, or in addition to, generating synthetic topograms representing planar views which span the full axial imaging dimension (e.g. anteroposterior (AP) and Lateral views), a volumetric slab region is selected and an image rendering of the slab region generated and displayed on a user interface. A slab region means a volumetric region consisting of a series or stack of axial slices through the anatomy. A slab region can be rendered through a volume rendering method such as Maximum Intensity Projection (MIP) or Average Intensity Projection (AIP). The location and thickness of the slab relative to the anatomy can be manually set, it may be pre-defined, or it may be automatically determined based on automated anatomical image segmentation. Once an initial position for the slab is set, its position may subsequently be adjusted by the user manually.

It is important to define the optimal slab thickness and position: if it is too thin or positioned incorrectly, part of the anatomy of interest may be excluded from view. If it is too thick, extraneous portions of the anatomy may be included which may obscure the desired anatomy when the projection rendering is applied.

A preferred approach is therefore to identify the target anatomy automatically from the acquired 3D volume (using any automated anatomical segmentation algorithm), and then to use the detected bounding box of this anatomy in the given direction to estimate the optimal position and thickness of the slab region. For instance, for a Sagittal slab, slab thickness can be set based on a width of a detected boundary of a target anatomy along a left-right direction relative to the subject (i.e. relative to the subject's left and right).

In some examples, it might be set to a thickness equal to said width, plus a further pre-defined margin, for example to allow for any error in the anatomy position detection. The position of the slab may be set to be centered relative to the center of the detected bounding box of the anatomy. The margin to be added may be different in different directions, and may be different for different anatomies.

An example is illustrated in Fig. 8 which shows an automatically identified bounding box 92 of an anatomy. As illustrated, the slab thickness 94 may be set wider than the anatomy bounding box width, with an additional margin added.

Since the initial 3D survey images are acquired using a lower radiation dose, they contain more noise than is ideal. Therefore, in order for the segmentation algorithms to work most effectively, the original acquired survey images may first be denoised using any suitable denoising algorithm.

Thus, where the source image data which is used is the first image data (i.e. survey image data), the method optionally may further comprise applying denoising to the first image data in advance of applying the image analysis operation.

Various embodiments outlined above refer to application of anatomical image analysis. Anatomical image analysis may comprise anatomical image segmentation.

By way of example, a wide variety of different anatomical segmentation approaches could be applied. In some examples, a machine-learning based approach may be used. For example a convolutional neural network (CNN) could be used, trained for anatomical segmentation of particular anatomical structures or regions. By way of further example, more classical algorithmic approaches may additionally or alternatively be used, such as model-based segmentation employing object-detection approaches, or approaches employing machine vision techniques.

By way of example, one suitable anatomical segmentation approach which makes use of a convolutional neural network is outlined in the following paper: O. Ronneberger, P. Fischer, and T. Brox, "U-Net: Convolutional Networks for Biomedical Image Segmentation," arXiv: 1505.04597 [cs], May 2015, Available: http://arxiv.org/abs/1505.04597.

By way of further example, another suitable anatomical segmentation approach making use of a convolutional neural network is outlined in the following paper: Brosch, T. and Saalbach, A., "Foveal fully convolutional nets for multi-organ segmentation" in Medical Imaging 2018: Image Processing, Angelini, E. D. and Landman, B. A., eds., 10574, 198 - 206, International Society for Optics and Photonics, SPIE (2018).

By way of further example, another suitable anatomical segmentation approach making use of machine vision techniques is outlined the following paper: Kaiming He et al, Mask R-CNN, arXiv eprint 1703.06870, 2017.

By way of further example, another suitable anatomical segmentation approach making use of machine vision techniques is outlined the following paper: Tsung-Yi Lin and Priya Goyal and Ross Girshick and Kaiming He and Piotr Dollar, Focal Loss for Dense Object Detection, arXiv eprint 1708.02002, 2017.

Various embodiments of the invention outlined above refer to performing volume rendering, or 3D rendering, of 3D image data.

In each case, a wide range of different volume rendering methods may be used in accordance with embodiments of the invention.

In preferred embodiments, a direct volume rendering method is used.

One preferred example is volume ray casting or volume ray tracing. This is an example of direct volume rendering. In volume ray casting, a respective sampling ray is generated for each desired pixel in the rendered image. An observer viewpoint is defined. Each ray starts at a center of projection of the viewpoint, and passes through a respective one of the image pixels on a defined image plane. The ray is sampled at regular intervals along the ray path, and a transfer function applied to the set of sampled pixel values to derive a pixel value for the respective pixel in the imaging plane to which the ray corresponds. By way of example, the pixel value can be a grey value, an RBG value, an opacity value, or a value representing any other visual or graphical characteristic or property. The transfer function for the volume rendering can be configured as desired for generating a desired visual representation of the 3D object imaged in the imaging data.

By way of example, the transfer function may apply a differing weight to pixels encountered along the path of each ray in dependence upon the pixel values of the pixels in the 3D image dataset. The weightings may vary non-linearly with respect to the pixel value. For example, there may be threshold above or below which a very low or zero weighting is applied. This allows for example selective rendering of only particular tissue types in the final volume rendered image.

A further aspect of the invention provides a computer program product comprising code means configured, when executed on a processor, the processor being operatively coupled with a medical imaging apparatus, to cause the processor to perform the method in accordance with any of the methods described in this disclosure.

Embodiments of the invention described above employ a processing arrangement. The processing arrangement may in general comprise a single processor or a plurality of processors. It may be located in a single containing device, structure or unit, or it may be distributed between a plurality of different devices, structures or units. Reference therefore to the processing arrangement being adapted or configured to perform a particular step or task may correspond to that step or task being performed by any one or more of a plurality of processing components, either alone or in combination. The skilled person will understand how such a distributed processing arrangement can be implemented. The processing arrangement includes a communication module or input/output for receiving data and outputting data to further components.

The one or more processors of the processing arrangement can be implemented in numerous ways, with software and/or hardware, to perform the various functions required. A processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A computer implemented method for simulating a preview of medical imaging scan data based on initial survey scan data, comprising:
receiving from a medical imaging apparatus first image data of an anatomy of a patient, wherein the first image data is 3D image data;
obtaining an indication of at least a first set of one or more candidate imaging scan parameters for a subsequent imaging scan to be performed on the anatomy;
retrieving from a datastore a machine learning model, wherein the machine learning model is trained to perform image-to-image translation, and is adapted to receive as an input at least a subset of a 3D image dataset of an anatomy, and is adapted to generate as an output simulated image data of the anatomy, wherein the simulated image data simulates an expected appearance of the image data which would be acquired from the medical imaging apparatus if run with said at least first set of candidate scan parameters;
processing the first image data using the machine learning model, to obtain simulated image data; and
acquiring second image data of the anatomy using the medical imaging apparatus with a second set of imaging scan parameters, wherein the second set of parameters may be the same or different to the first set of parameters.

2. The method of claim 1, wherein the method comprises controlling a user interface to display a visual representation of the simulated image data.

3. The method of claim 1 or 2, wherein the method comprises:
accessing a datastore storing a plurality of versions of the machine learning model, each respective version trained to output simulated image data which simulates an expected appearance of the input image data if acquired from the medical imaging apparatus run with a different respective set of candidate scan parameters;
retrieving from the datastore one of the versions of the machine learning model, in dependence upon the obtained at least first set of candidate scan parameters; and
applying the retrieved version to the received first image data.

4. The method of claim 3, wherein the method comprises generating a plurality of sets of simulated image data for each of a plurality of sets of candidate imaging scan parameters, based on, for each candidate set of scan parameters: retrieving from the datastore one of the machine learning models; and applying the machine learning model to the candidate set of scan parameters.

5. The method of claim 4, wherein the method comprises:
controlling a user interface to display a visual representation of each set of simulated image data, and an indication of the candidate scan parameters corresponding to each set of simulated image data;
receive from the user-interface a user-indicated selection of one of the candidate sets of scan parameters;
and wherein the second set of scan parameters used for acquiring the second image data is defined by the user selection.

6. The method of claim 5, comprising controlling the user interface such that the user-indicated selection of one of the candidate sets of scan parameters is achieved through a user-selection of one of the displayed sets of simulated image data.

7. The method of any of claims 1-6, wherein the method comprises:
providing on a user interface a user control permitting a user to define a custom set of candidate imaging scan parameters;
receiving from the user interface a user-defined custom set of candidate scan parameters;
wherein the step of retrieving the machine learning model from the datastore comprises retrieving a machine learning model trained to generate simulated image data which simulates the appearance of image data acquired with the user-defined custom set of candidate scan parameters; and
wherein the method further comprises displaying the simulated image data output from the machine learning model on a user interface.

8. The method of claim 7, wherein a change in the custom scan parameters by the user via the user control automatically triggers generation of new simulated image data in accordance with the changed custom scan parameters, by retrieving a machine learning model trained to simulate the appearance of image data acquired with the custom scan parameters.

9. The method of any of claims 1-8, wherein the method further comprises applying a quality assessment to the simulated image data to derive a quality indicator for the simulated image data.

10. The method of claim 4 and claim 9, further comprising:
applying a quality assessment to each set of simulated image data to derive a quality indicator for each set of simulated image data;
selecting one of the sets of candidate scan parameters based on comparison of the quality indicators for the different sets of simulated image data; and
wherein the second set of scan parameters is set in accordance with the selection, and wherein acquisition of the second image data is triggered automatically after the selection.

11. The method of any of claims 1-10, further comprising
controlling a user interface to display a visual representation of the simulated image data;
receiving from the user interface a user-indicated adjusted set of candidate imaging scan parameters, subsequent to display of the simulated image data;
wherein the received adjusted set of imaging scan parameters are used as the second set of scan parameters.

12. The method of any of claims 1-11, wherein the machine learning model is a deep learning machine learning model, and preferably wherein the machine learning model employs use of a Generative Adversarial Network (GAN).

13. The method of any of claims 1-12, wherein the method further comprises:
processing source 3D image data of the anatomy of the patient to generate: a first 2D image representing a view of the anatomy across a first view plane, the first view plane representing a view from a first angular position relative to the anatomy, and to generate a second 2D image representing a view of the anatomy across a second view plane, the second view plane representing a view from a second angular position relative to the anatomy;
obtaining an indication of one or more volumetric sub-regions within the source image data which each contains a respective anatomy of interest;
for each of the one or more volumetric sub-regions, extracting from the source image data at least a first and second 2D slice through the respective sub-region, each 2D slice being orthogonal to both the first and second view planes;
controlling a user interface to display a representation of: the first 2D image, the second 2D image, a boundary outline of each volumetric sub-region superposed on the first 2D image and second 2D image, and each of the generated 2D slices.

14. The method of claim 13, wherein the method further comprises receiving from the user interface a user-indicated adjustment of the volumetric sub-region, and optionally wherein the adjustment is a change in a position of the volumetric sub-region relative to the patient anatomy, or a change in the volume defined by the sub-region.

15. The method of claim 14, wherein the method comprises controlling the user interface so that, responsive to the user indicating the adjustment to the sub-region, the displayed boundary of the sub-region is automatically adjusted in accordance with the user-indicated adjustment.

16. The method of claim 14 or 15, wherein, responsive to receipt of the user-indicated adjustment of a given sub-region, the method further comprises extracting a new first and second 2D slice through each volumetric sub-region, and displaying the new 2D slices in place of the 2D slices previously displayed on the user interface.

17. The method of any of claims 13-16, wherein obtaining the indication of the sub-region of interest comprises applying an image analysis operation to the source image data to detect an anatomical object of interest, and subsequently determining a volumetric-subregion in dependence upon a boundary of the identified anatomical object of interest within the image data.

18. The method of any of claims 1-17, wherein the method further comprises:
identifying a slab of interest within 3D source image data, wherein the 3D source image data is the first image data or the simulated image data, and wherein a slab is a volumetric region consisting of a consecutive stack of image slices in the source image data;
extracting a stack of image slices from the source image data corresponding to the slab of interest;
generating a volume rendering of the slab of interest;
displaying the volume rendering on a user interface.

19. The method of claim 18, wherein the method further comprises:
applying an image analysis operation to identify an anatomical region of interest in the source image data;
identifying the slab of interest within the source image data in dependence upon the identified anatomical region of interest by setting a position and thickness of the slab within the image data so as to overlap with at least a portion of the anatomical region of interest.

20. The method of claim 19,
wherein the source image data is the first image data; and
wherein the method further comprises applying denoising to the first image data in advance of applying the image analysis operation.

21. A computer program product comprising code means configured, when executed on a processor, the processor being operatively coupled with a medical imaging apparatus, to cause the processor to perform the method in accordance with any of claims 1-20.

22. A processing arrangement, comprising:
an input/output for operatively coupling in use with a medical imaging apparatus; and
one or more processors, adapted to perform the method in accordance with any of claims 1-20, wherein the first image data is received at the input/output from the medical imaging apparatus.
